Europäisches Patentamt

**European Patent Office**

**Office européen des brevets**

(19)

(11) Publication number: **0 206 750**
**A1**

(12) **EUROPEAN PATENT APPLICATION**

(21) Application number: **86304683.5**

(22) Date of filing: **17.06.86**

(51) Int. Cl.⁴: **F 03 D 11/04,** F 03 D 9/00

(30) Priority: **17.06.85 GB 8515324**
**13.01.86 GB 8600701**
**13.01.86 GB 8600702**

(43) Date of publication of application: **30.12.86**
**Bulletin 86/52**

(84) Designated Contracting States: **AT BE CH DE FR IT LI LU NL SE**

(71) Applicant: **BICC Public Limited Company, Devonshire House Mayfair Place, London W1X 5FH (GB)**
Applicant: **Mewburn-Crook Co. Ltd., 16, Avenue Road, Isleworth Middlesex (GB)**

(72) Inventor: **Mewburn-Crook, Anthony J.S., 16, Avenue Road Isleworth, Middlesex, TW5 7JN (GB)**
Inventor: **Cockburn, James, 8, Bonaly Brae Colinton, Edinburgh (GB)**
Inventor: **Boothman, Godfrey Michael, 5, Mayfield View Lymm, Cheshire (GB)**

(74) Representative: **Ross Gower, Edward Lewis et al, BICC plc Patents and Licensing Department 38 Ariel Way Wood Lane, London W12 7DX (GB)**

(54) **An improved wind energy convertor.**

(57) In a wind energy convertor comprising an upstanding support, a fan 14 and a turbine 10 rotatably mounted about the vertical axis of the support and, above the fan and turbine, an annular body 3 whose upper surface 7 is so shaped as to cause the velocity of the wind blowing against the surface to increase as it passes over the surface, the upstanding support comprises a plurality of upstanding elongate members 1 uniformly spaced around the fan and turbine. The upstanding members may be the legs of a lattice work tower but, preferably, they are vertical columns 1 with respect to which the annular body 3 is so mounted that the annular body, and the fan 14 and turbine 10 carried thereby, can be raised or lowered when required, the vertical columns having associated means 17 for raising and lowering the annular body with respect to the columns and for locking the annular body with respect to the columns when it is in the desired position.

An Improved Wind Energy Convertor 0206750

This invention relates to apparatus for converting the energy of the wind into mechanical energy for use in the generation of electricity or other source of power and, for convenience, such apparatus will hereinafter be referred to by the generic expression "wind energy convertor".

In the specification of Patent No: 2083564B, there is described and claimed a wind energy convertor comprising an upstanding column; a fan which is supported on the upper end of the column in such a way that the fan is freely rotatable about the axis of the column and which comprises a plurality of circumferentially spaced, radially extending blades; a substantially circular turbine which surrounds and is radially spaced from an uppermost part of, and is supported by, and freely rotatable about the axis of, the column, and which comprises a plurality of circumferentially spaced blades extending lengthwise with respect to the column; and an annular body which is supported by the column and which is coaxial with and is positioned adjacent to the outer circumferential edge of the fan, the upper surface of the annular body being above the fan and being so shaped as to cause the velocity of wind that blows against the surface to increase as it passes over the surface, thereby creating a reduction in air pressure in the circular space bounded by the annular body so that wind blowing against the blades of the turbine and driving the turbine rotatably about the axis of the column is drawn upwardly within the turbine to drive the fan rotatably about the axis of the column in the same rotational direction as the turbine, thereby converting the energy of the wind into rotational mechanical energy.

It is an object of the present invention to provide an improved wind energy convertor which works on the same principle as the wind energy convertor of our aforesaid patent to convert into mechanical energy the energy of a wind blowing in substantially any direction, which can be erected in substantially any weather conditions and which can be of a substantially larger construction than the wind energy convertor of the aforesaid patent.

According to the present invention, the improved wind energy convertor comprises a plurality of upstanding elongate members uniformly spaced around a central vertical axis; a substantially circular turbine which is surrounded by, and directly or indirectly supported by uppermost parts of, the upstanding members in such a way that the turbine is freely rotatable about said vertical axis and which comprises a plurality of circumferentially spaced blades extending lengthwise with respect to the upstanding members; and an annular body which is supported by the upstanding members and which is coaxial with and is positioned adjacent to the upper end of the turbine, the upper surface of the annular body being above the turbine and being so shaped as to cause the velocity of wind that blows against this surface to increase as it passes over the surface, thereby creating a reduction in air pressure in the circular space bounded by the annular body so that wind blowing against the blades of the turbine is drawn upwardly within the turbine and out of said circular space to drive the turbine rotatably about said vertical axis, thereby converting the energy of the wind into rotational mechanical energy.

The plurality of upstanding elongate members may be the legs of a lattice work tower or pylon but, in a preferred embodiment, the plurality of upstanding elongate members are substantially vertical columns on or with respect to which the annular body is slidably or otherwise so mounted that it can be raised or lowered when required; the turbine is carried by and is freely rotatable with respect to the annular body so that it is indirectly supported by the vertical columns; and the vertical columns have associated means for raising or lowering the annular body, and the turbine carried thereby, with respect to the columns and for locking the annular body with respect to the columns when it is in the desired position. The aforesaid preferred

4.

embodiment has the important advantage that the annular body, and the turbine carried thereby, can be raised with respect to the columns to the desired position without the use of a heavy crane and, as a consequence, in weather conditions when the use of a crane would be too dangerous and/or the site inaccessible to cranes and other lifting devices.

The lifting means associated with the substantially vertical columns may take any convenient form but preferably each column has at its upper and lower ends pulleys around which at least one hawser connected to the annular body can be drawn by at least one associated motor or other drive means. Each vertical column preferably also carries locking means by which the annular body can be mechanically locked to the column when the annular body is in the desired position.

In some circumstances, at least some of the upstanding elongate members of the improved wind energy convertor may constitute structural members of a building on which the improved wind energy convertor is supported.

Preferably, to increase the efficiency of the improved wind energy convertor and to enable it to self-start at even lower wind speeds, there is positioned between the upper end of the turbine and the

5.

annular body, a fan which is surrounded by, and directly or indirectly supported by the upper ends of, the upstanding members in such a way that the fan is freely rotatable about the central vertical axis of the upstanding members, and which comprises a plurality of circumferentially spaced, radially extending blades, the arrangement being such that wind blowing against the blades of the turbine and driving the turbine rotatably about said vertical axis is drawn upwardly within the turbine to drive the fan rotatably about said vertical axis in the same rotational direction as the turbine. The fan and the turbine may be independently freely rotatable about the vertical axis but, preferably, the fan and the turbine are rigidly secured together so that both will rotate at the same speed.

Preferably, also, to accelerate a larger volume of wind between the blades of the turbine and thereby increase the amount of wind energy available for conversion, the wind energy convertor includes, radially outwardly of and surrounding the turbine, a plurality of circumferentially spaced blades which depend from the annular body and extend lengthwise with respect to the columns or other upstanding members and which define, between adjacent blades, a plurality of venturi through which wind is directed on to the blades of the turbine, the surfaces of the venturi blades being so shaped as to direct the wind on to the blades of the turbine and, at the same time, to shield from the wind the on-coming blades of the turbine, thereby substantially reducing the drag on the turbine and enabling the turbine to rotate such that its peripheral velocity preferably does not exceed twice the linear velocity of the wind. Preferably, also, the venturi blades are secured between the annular body and a second annular body which is coaxial with and spaced below the first or upper annular body and which, also, is slidably or otherwise so mounted on the vertical columns that it can be raised or lowered as required. The radially outer edges of the venturi blades may extend substantially vertically but, preferably, they are inclined radially outwardly in a direction towards the upper end of the convertor.

The upper surface of the first annular body is preferably of such a shape as to encourage accelerated flow of the wind over its surface and, in the preferred embodiment, the angle of inclination of the upper surface to the vertical axis increases smoothly in an upward direction. The accelerated flow of the wind over the upper surface of the first annular body causes an increase in the velocity of wind flowing upwardly through the fan and this increase in velocity of the upwardly flowing wind creates a reduction in air pressure in the space bounded by the turbine, with the result that the inherent resistance of the turbine to the rate of flow of air through the turbine is reduced.

The upstanding elongate members, the annular body positioned above the fan and, when present, the second annular body may be preformed before being assembled together to form the improved wind energy convertor but, in the case of larger wind energy convertors, e.g. having an output of 1 megawatt and above, the upstanding elongate members and these annular bodies preferably are manufactured in situ of reinforced concrete.

Where the first annular body positioned above the fan is a closed body of reinforced concrete or other substantially fluid-impermeable material, the closed annular body may have inlet and outlet ports so that it can be employed as a tank for the storage of water or other fluid and at least one pump may be associated with the closed annular body for pumping water or other fluid into and/or out of the tank, the wind energy convertor thereby serving the dual purposes of a wind energy convertor and a water tower. The or each pump may be electrically or mechanically driven.

Where the improved wind energy convertor includes a second or lower annular body, the second annular body may also be a closed annular body of reinforced concrete

8.

or other substantially fluid-impermeable material and may be interconnected by at least one pipe or other means to, and serve as an extension of, the first or upper closed annular body for the storage of water or other fluid; the second closed annular body may also have inlet and outlet ports for introduction or extraction of water or other fluid.

In the case of larger wind energy convertors, to provide for free rotatable motion of the fan and the turbine about the vertical axis of the plurality of upstanding elongate members, the fan and the turbine may each have at or near its circumferential edge means engaging in a circular track which is directly or indirectly carried by the first annular body or, when present, the second annular body. For example, the fan may be dependent from, and rotatably mounted to run in, a circular track carried on the undersurface of the first annular body positioned above the fan and the turbine may be rotatably mounted to run in a circular track carried on the upper surface of the second or lower annular body; the fan and the turbine may run on wheels or may be magnetically levitated.

In an alternative embodiment of the invention, the first and second annular bodies, and the fan and turbine carried thereby, are spaced inwardly of the plurality of vertical columns and are suspended from the vertical

9.

columns by flexible ties. The improved wind energy convertor of this particular embodiment is especially suitable for use in a multi-unit wind energy convertor complex comprising a multiplicity of mutually spaced vertical columns bounding between them a plurality of mutually spaced vertical axes on each of at least some of which first and second annular bodies, and a fan and turbine carried thereby, are suspended by flexible ties from surrounding vertical columns. In this case the rotational mechanical energy provided by the several units may, if desired, be accumulated.

The mechanical energy obtained by conversion of the energy of the wind may be used in the generation of electricity by means of any convenient and known method and, for this purpose, the magnetic poles and armature winding of an electric generator may be carried by the wind energy convertor at a position intermediate of its upper and lower ends.

Preferably, a plurality of magnetic poles are carried by the turbine at circumferentially spaced positions remote from said vertical axis and the armature winding is directly or indirectly supported by the structure and is in the form of a plurality of circumferentially spaced coils arranged with their axes extending radially from said vertical axis, adjacent coils being wound in opposite directions to ensure that the generated current flows in the same direction in the armature winding for each half cycle of the alternating output.

The electric generator may be a simple single phase or two phase generator but, in most instances, preferably it is a three phase generator.

The first annular body and the venturi blades can effectively constitute a stator on which the coils of the armature winding can be supported. Preferably, each coil is formed around a salient or protruding pole secured to the stator.

The plurality of magnetic poles may be carried at the upper end and/or the lower end of the turbine and the associated stator coils may be secured to the first annular body at the upper end of the convertor and/or, when present, to the second annular body axially spaced therefrom.

The mechanical energy obtained by conversion of the energy of the wind alternatively may be employed to produce power to split water (an abundant and free electrolyte) into the gases, hydrogen and oxygen, which can be stored in a readily available form, the hydrogen for use as a non-polluted fuel and the oxygen for a useful or saleable commodity. Hydrogen can be used to run existing generators to produce electricity with no lead or carbon pollution from the exhaust; it can also be used to power some forms of apparatus, e.g. cookers, boilers, furnaces and oxy-hydrogen welding apparatus. Additionally, hydrogen and oxygen can feed fuel cells which produce electricity directly without any moving parts.

The improved wind energy convertor of the present invention ensures that both the horizontal and vertical components of the energy of the wind are converted in to rotational mechanical energy without inhibiting to any great extent the natural movement of the wind. Furthermore, the plurality of radially extending blades of the fan and the plurality of longitudinally extending blades of the turbine provide the important advantage that the improved wind energy convertor is self starting, irrespective of the direction of the wind. Additionally, the improved wind energy convertor is pleasing to the eye and can therefore be installed in areas of natural beauty without being any more obtrusive than the conventional sail mill.

The invention is further illustrated by a description, by way of example, of preferred forms of wind energy convertor and of preferred forms of multi-pole generator carried by wind energy convertors, with reference to the accompanying drawings, in which:-

Figure 1 is a side view of a first preferred form of wind energy convertor drawn on a reduced scale;

Figure 2 is a side view of the first preferred form of wind energy convertor shown in Figure 1, shown partly in elevation and partly in section, illustrating the arrangement for raising and lowering the stator and turbine assembly of the convertor up and down the vertical columns;

Figure 3 is a plan view of the first preferred form of wind energy convertor shown in Figure 1;

Figure 4 is a side view, shown partly in elevation and partly in section, of the stator and turbine assembly of the first preferred form of wind energy convertor shown in Figure 1;

Figure 5 is a diagrammatic side view of a second preferred form of wind energy convertor drawn on a reduced scale;

Figure 6 is a diagrammatic side view of a third preferred form of wind energy convertor drawn on a reduced scale;

Figure 7 is a plan view of the third preferred form of wind energy convertor shown in Figure 6;

Figure 8 is a diagrammatic transverse cross-sectional view of the first preferred form of wind energy convertor shown in Figure 1 and incorporating a first preferred form of multi-pole electric generator, and

13,

Figures 9 to 13, respectively, are diagrammatic fragmental sectional side views of five alternative arrangements of incorporating a multi-pole electric generator in the first preferred form of wind energy convertor shown in Figure 1.

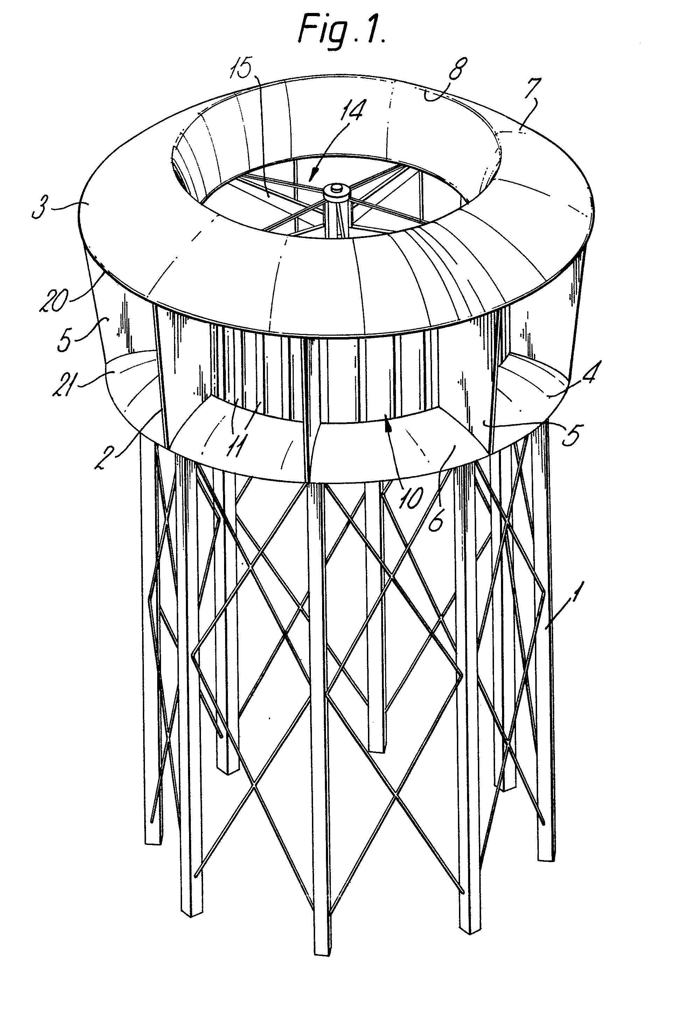

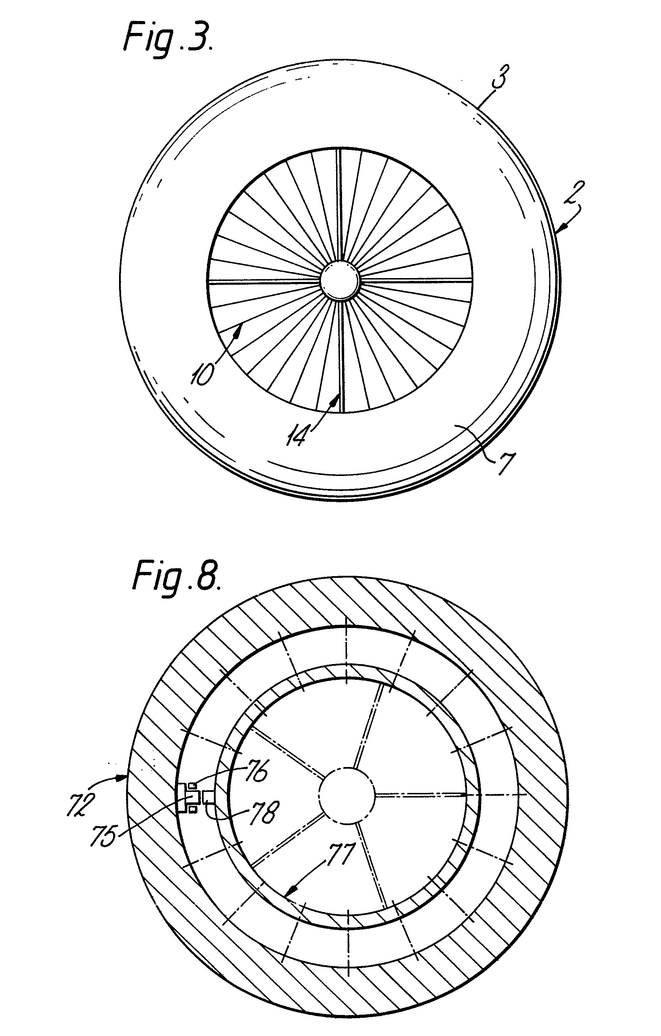

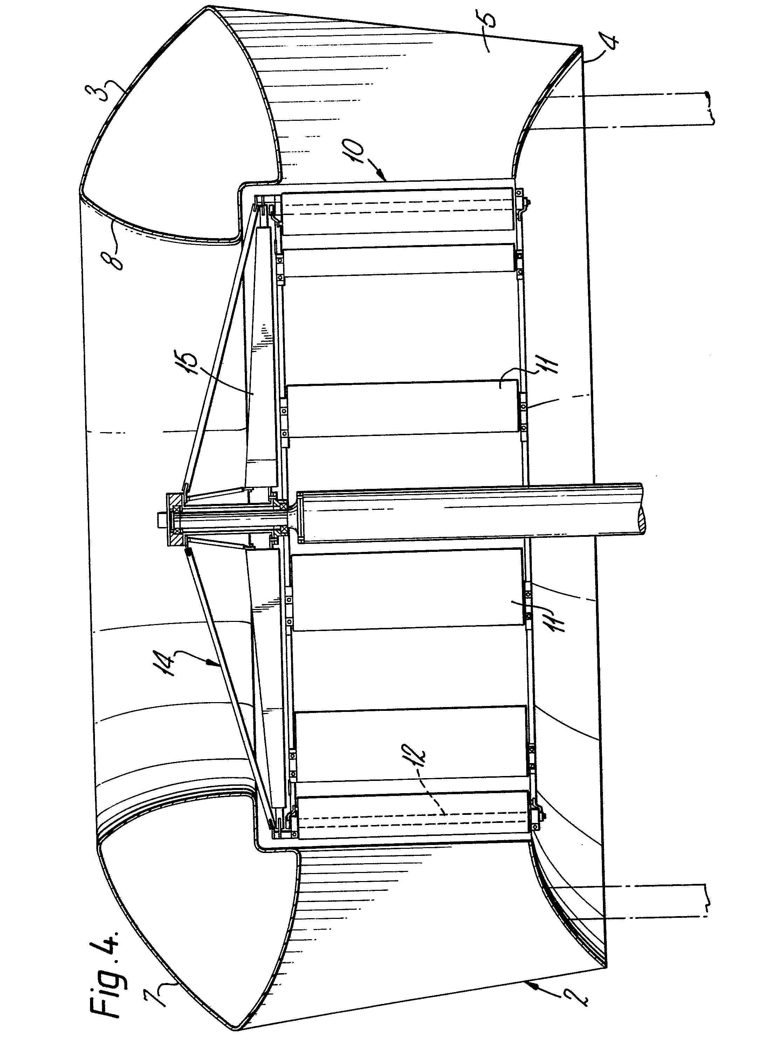

Referring to Figures 1 to 4, the first preferred form of wind energy convertor comprises eight vertical columns 1 uniformly spaced around a central vertical axis and, slidably mounted on the columns, a stator 2 comprising an upper annular body 3 and a lower annular body 4 which are interconnected by eight circumferentially spaced blades 5 lying in vertical radial planes. The stator 2 surrounds a circular turbine 10 which is supported by the upper annular body 3 and lower annular body 4 in such _ way that the turbine is freely rotatable about said central vertical axis and which comprises a plurality of circumferentially spaced blades 11 extending lengthwise with respect to the columns 1. Positioned between the upper end of the turbine 10 and the upper annular body 3 is a fan 14 which is rigidly secured to the turbine and which comprises a plurality of circumferentially spaced, radially extending blades 15.

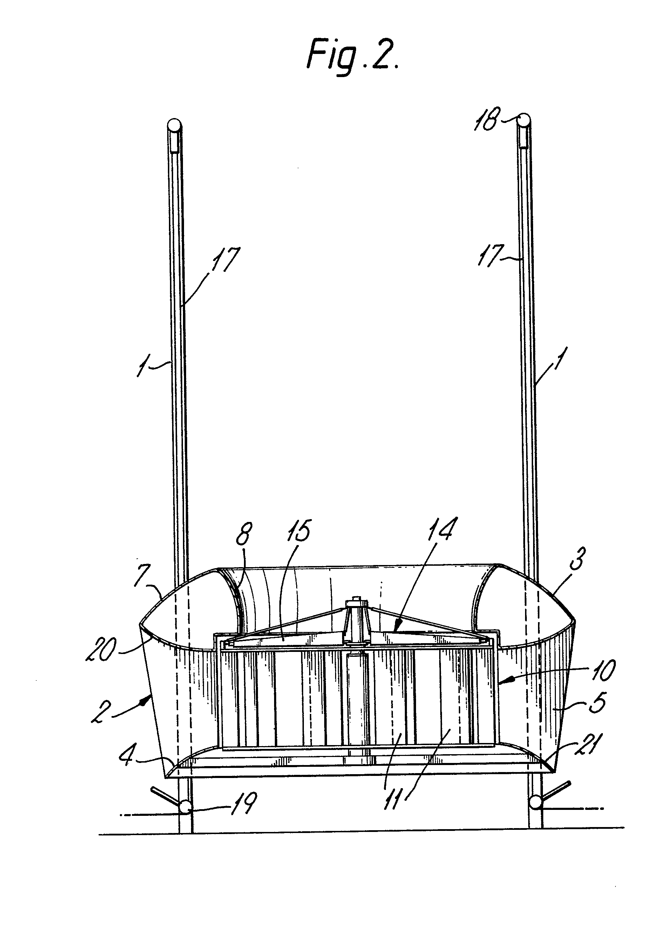

As will be seen on referring to Figure 2, the stator 2 is slidably mounted on the vertical columns 1 and can be raised or lowered with respect to the columns by means of hawsers 17, one hawser being associated with each column. Each hawser 17 is connected at one of its ends to the upper annular body 3, passes over a pulley 18 at the upper end of its associated column 1 and downwardly around a pulley 19 at the lower end of its associated column to a motor (not shown) by means of which the stator 2 and the turbine 10 and fan 14 carried thereby, can be raised or lowered with respect to the columns. Locking means (not shown) is provided for locking stator 2 with respect to the columns 1 when the stator is in its operating position.

The upper surface 7 of the upper annular body 3 is so shaped as to cause the velocity of wind that blows against this surface to increase as it passes over the surface, thereby creating a reduction in air pressure in the circular space 8 bounded by the annular body. The vertical blades 5 define, between adjacent blades, a plurality of venturi 6 through which wind is directed on to the blades 11 of the turbine 10. The surfaces of the venturi blades 5 are so shaped as to direct the wind on to the blades 11 of the turbine 10 and, at the same time, to shield from the wind the downwind blades of the turbine. The undersurface 20 of the upper annular body 3 and the upper surface 21 of the lower annular body 4 are also so shaped as to assist in directing and accelerating the wind through the venturi 6 on to the blades 11 of the turbine 10.

Each of the turbine blades 11 has a transverse cross-sectional shape of substantially aerofoil form and is pivotally mounted about a substantially vertical axis passing through the blade. A torsion bar 12 which extends along the vertical pivotal axis of each turbine blade 11 and which is fixed at each of its ends serves as a means of restraining the turbine blade against pivotal movement about its vertical pivotal axis.

Wind blowing against the blades 11 of the turbine 10 will drive the turbine rotatably about said central vertical axis in an anti-clockwise direction. Since the velocity of wind blowing against the uppermost surface 7 of the upper annular body 3 is caused to increase as it passes over the surface, a reduction in air pressure is created in the circular space 8 and consequently the velocity of the wind flowing upwardly through the turbine 10 and the circular space will increase. The increase in velocity of wind flowing upwardly creates a reduction in air pressure in the annular space bounded by the turbine 10 with the result that the inherent resistance of the turbine to rotation about said central vertical axis is also reduced. The amount of wind energy available for conversion is further increased by the venturi 6 because wind flowing through these openings is accelerated and directed on to the pivotable turbine blades 11 in such a way as to assist in driving

16.

the turbine 10 in an anti-clockwise direction, the blades 5 defining the venturi shielding from the wind the on-coming blades 11 of the turbine, thereby substantially reducing drag on the turbine and enabling the turbine to rotate at a higher linear velocity than that of the wind.

As the velocity of the wind directed on to the pivotable turbine blades 11 gradually increases, each of the blades is caused to pivot about its vertical axis in an anti-clockwise direction against the action of the restraining torsion bar 12 from an initial start position, in which the major chord of the blade lies at an angle of +20° to a tangent of the circle passing through the vertical pivotal axes of the blades 11 to a normal running position in which the major chord of the blade lies at an angle of +10° to said tangent, where the blade is restrained by the torsion bar. In the event of the velocity of the wind reaching or exceeding a maximum acceptable value e.g. gale force, causing the turbine 10 to rotate at a speed above a desired predetermined value, the additional centrifugal force on each of the turbine blades 11 causes the blade to pivot further about its vertical axis against the action of its associated restraining torsion bar 12 until the major chord of the turbine blade lies in a "feathering" position at an angle of -10° to said tangent, at about which position aerodynamic spoiling will occur thus limiting any further increase of speed above a predetermined maximum value irrespective of the velocity of the wind.

The upper annular body 3 may be made of reinforced concrete and may have inlet and outlet ports (not shown) connected by pipework to a pump by which water or other fluid can be pumped into or out of the annular body which can be used for the storage of water or other fluid.

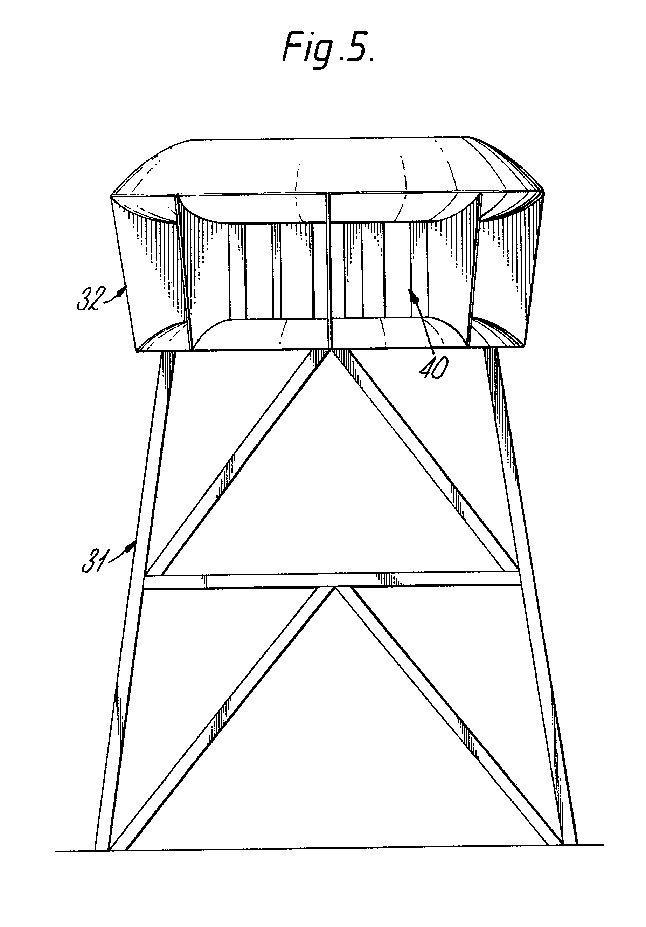

The assembly of stator 32, turbine 40 and fan (not shown) of the second preferred form of wind energy convertor shown in Figure 5 is of substantially identical construction to the assembly of stator 2, turbine 10 and fan 14 of the first preferred form of wind energy convertor shown in Figure 1 but, in this case, the assembly is permanently secured to the upper part of a lattice work tower 31.

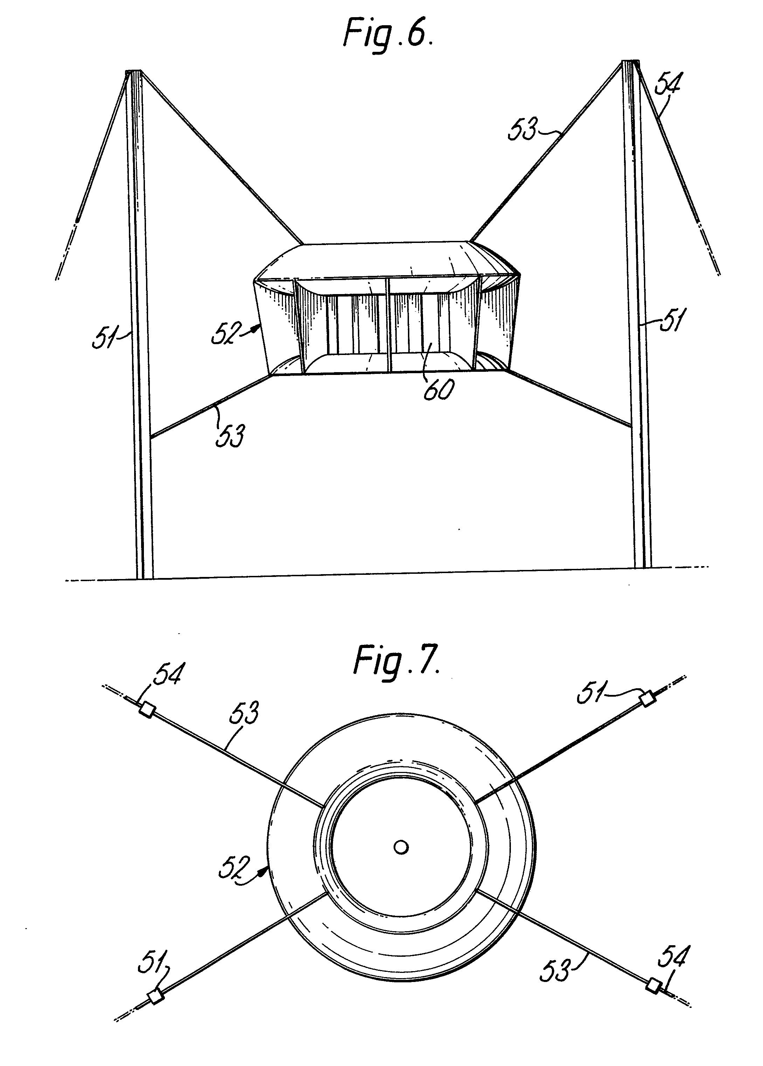

In the third preferred form of wind energy convertor shown in Figures 6 and 7, the assembly of stator 52, turbine 60 and fan (not shown) is of substantially identical construction to the assembly of the first preferred form of wind energy convertor shown in Figure 1 but, in this case, the assembly of stator 52, turbine 60 and fan is spaced inwardly of a plurality of vertical columns 51 and is suspended from the

18.

vertical columns by a plurality of flexible ties 53. Guy ropes 54 extend between the upper part of each vertical column 51 and a ground anchor (not shown). The wind energy convertor illustrated in Figures 6 and 7 is especially suitable for use in a multi-unit wind energy convertor complex comprising a multiplicity of mutually spaced vertical columns bounding between them a plurality of mutually spaced vertical axes on each of at least some of which an assembly of stator, turbine and fan is suspended by flexible ties from surrounding vertical columns, the rotational mechanical energy provided by the several assemblies being accumulated.

The wind energy convertors illustrated in Figures 1 to 4, 5 and 6 and 7 may each include an electric generator carried by the wind energy convertor at a position intermediate of the upper and lower ends of the convertor.

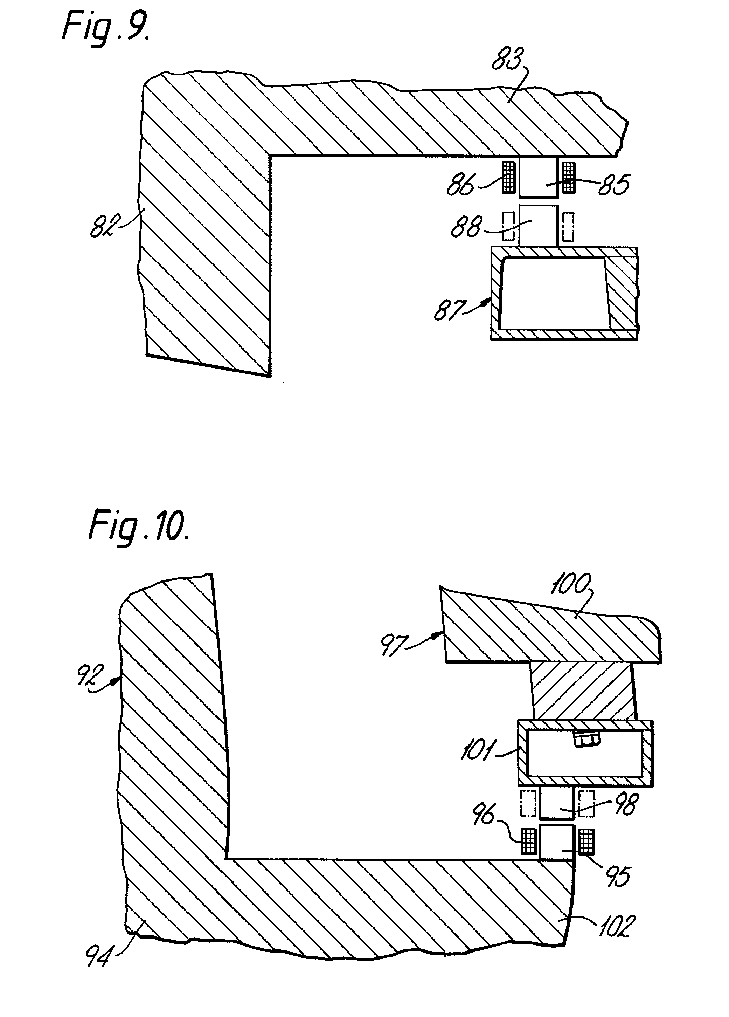

In the wind energy convertor illustrated in Figure 8, a plurality of magnetic poles 78 (of which one only is shown) are carried by the turbine 77 at circumferentially spaced positions remote from said central vertical axis and the armature winding is in the form of a plurality of circumferentially spaced coils 76 formed around salient poles 75 (of which one only is shown) secured to the stator 72, the axes of the coils extending radially from said central vertical axis.

19.

Adjacent coils 76 are wound in opposite directions to ensure that the generated current flows in the same direction in the armature winding for each half cycle of the alternating output.

In the arrangement shown in Figure 9, a plurality of permanent electromagnets 88 are carried at circumferentially spaced positions around the peripheral edge of the upper part of the turbine 87 and a like number of salient poles 86 are circumferentially spaced around and depend downwardly from the upper annular body 83 of the stator 82. A coil 86 is formed around each salient pole 85. The axes of the coils 86 and of the coils of the electromagnets 85 extend vertically.

In the arrangement shown in Figure 10, the blades of the turbine 97 support a circumferentially extending rotor 101 from which depend at circumferentially spaced positions a plurality of permanent electromagnets 98. Projecting radially inwardly from the lower annular body 94 of the stator 92 is a bracket 102 on which is carried like number of upstanding salient poles 95, around each of which a coil 96 is formed. The axes of the coils 96 and of the coils of the electromagnets 98 extend vertically.

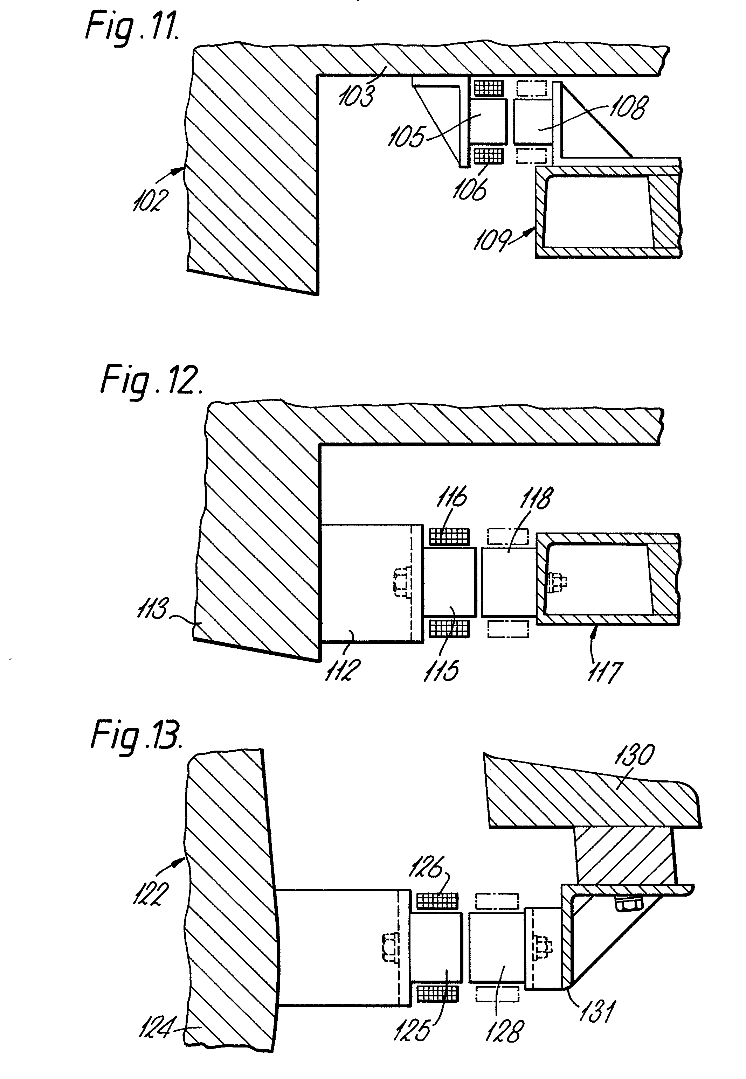

The arrangement shown in Figure 11 is similar to the arrangement shown in Figure 9 except that the permanent electromagnets 108 are so supported at the upper end of the turbine 107 and the salient poles 105 are so supported from the upper annular body 103 of the stator 102, that the axes of the coils of the electromagnets and of the coils 106 extend radially from the central vertical axis of the wind energy convertor.

The arrangement shown in Figure 12 is a more detailed view of the arrangement shown in Figure 8. A plurality of permanent electromagnets 118 are supported at the upper end of the turbine 117 with the axes of the coils of the electromagnets extending radially with respect to the central vertical axis of the convertor. A like number of salient poles 115 are supported on brackets 112 extending radially inwardly of the upper annular body 113, the axes of coils 116 and the salient poles extending radially with respect to the central vertical axis of the convertor.

The arrangement shown in Figure 13 is similar to the arrangement shown in Figure 10 except that the permanent electromagnets 121 are so supported by a lower rotor 131 secured to the lower end of the turbine blades 130 and the salient poles 125 are so supported by the lower annular body 124 of the stator 122 that the axes of the coils of the electromagnets and of the coils 126 extend radially from the central vertical axis of the wind energy convertor.

21.

In each of the arrangements shown in Figures 9 and 13 adjacent stator coils are wound in opposite directions to ensure that the generated current flows in the same direction in the armature winding for each half cycle of the alternating output.

22.

CLAIMS:

1. A wind energy convertor comprising an upstanding structure having a central vertical axis; a fan which is directly or indirectly supported by an upper end of, the upstanding structure in such a way that the fan is freely rotatable about said vertical axis and which comprises a plurality of circumferentially spaced, radially extending blades; a substantially circular turbine which is directly or indirectly supported by an uppermost part of, the upstanding structure in such a way that the turbine is freely rotatable about said vertical axis and which comprises a plurality of circumferentially spaced blades extending lengthwise with respect to the upstanding structure; and an annular body which is supported by the upstanding structure and which is coaxial with and is positioned adjacent to the outer circumferential edge of the fan, the upper surface of the annular body being above the fan and being so shaped as to cause the velocity of wind that blows against the surface to increase as it passes over the surface, thereby creating a reduction in air pressure in the circular space bounded by the annular body so that wind blowing against the blades of the turbine and driving the turbine rotatably about said vertical axis is drawn upwardly within the turbine to drive the fan rotatably about said vertical axis in the same

23.

rotational direction as the turbine, thereby converting the energy of the wind into rotational mechanical energy, characterised in that the upstanding structure is a plurality of upstanding elongate members uniformly spaced around the fan and turbine.

2. A wind energy convertor as claimed in Claim 1, characterised in that the plurality of upstanding elongate members are substantially vertical columns on or with respect to which the annular body is slidably or otherwise so mounted that it can be raised or lowered when required; the fan and turbine are carried by and are freely rotatable with respect to the annular body so that they are indirectly supported by the vertical columns; and the vertical columns have associated means for raising or lowering the annular body, and the fan and turbine carried thereby, with respect to the columns and for locking the annular body with respect to the columns when it is in the desired position.

3. A wind energy convertor as claimed in Claim 2, characterised in that each column has at its upper and lower ends pulleys around which at least one hawser connected to the annular body can be drawn by at least one associated motor or other drive means for raising or lowering the annular body, and the fan and turbine carried thereby.

4. A wind energy convertor as claimed in Claim 2 or 3, characterised in that each vertical column carries locking means by which the annular body can be mechanically locked to the column when the annular body is in the desired position.

5. A wind energy convertor as claimed in Claim 1, characterised in that the plurality of upstanding elongate members are the legs of a lattice work tower or pylon.

6. A wind energy convertor as claimed in Claim 1, characterised in that at least some of the upstanding elongate members constitute structural members of a building on which the wind energy convertor is supported.

7. A wind energy convertor as claimed in Claim 1 or 2 which includes, radially outwardly of and surrounding the turbine, a plurality of circumferentially spaced blades which extend lengthwise with respect to said central vertical axis and are secured between the annular body and a second annular body which is coaxial with and spaced below the first annular body and which define, between adjacent blades, a plurality of venturi through which wind is directed on to the blades of the turbine, the surfaces of the venturi blades being so shaped as to direct the wind on to the blades of the turbine and, at the same time, to shield from the wind the on-coming blades of the turbine, characterised in that the first and second annular bodies, and the fan and the turbine carried thereby, are spaced inwardly of the plurality of upstanding elongate members and are suspended from the elongate members by flexible ties.

8.    A multi-unit wind energy convertor complex characterised in that the complex comprises a multiplicity of wind energy convertors as claimed in Claim 7, the rotational mechanical energy provided by the several units being accumulated.

9.    A wind energy convertor as claimed in any one of Claims 1 to 7, characterised in that the magnetic poles and armature winding of an electric generator are carried by the wind energy convertor at a position intermediate of its upper and lower ends.

Fig.1.

Fig.2.

**Fig.3.**

**Fig.8.**

Fig.4.

4/8

0206750

Fig.5.

Fig.6.

51   52   60   53   54   51

Fig.7.

54   53   51

52

51   53   54

Fig.9.

Fig.10.

*Fig.11.*

103

105

108

102

106

109

*Fig.12.*

116

118

113

112

115

117

*Fig.13.*

130

126

122

124

125

128

131

0206750

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | GB-A-2 083 564 (SEBASTIAN) * Abstract * | 1 | F 03 D 11/04 F 03 D 9/00 |
| A | | 7 | |
| Y | US-A-4 245 958 (EWERS) * Column 3, line 22 - column 4, line 9 * | 1 | |
| A | | 5 | |
| A | DE-A-2 838 239 (NIKA) * Page 10, line 17 - page 12, line 19 * | 2-4 | |
| A | US-A-4 311 434 (MINORU ABE) * Column 2, line 51 - column 4, line 65 * | 2-5 | TECHNICAL FIELDS SEARCHED (Int. Cl.4) F 03 D |
| A | US-A-4 217 501 (ALLISON) * Column 2, line 14 - column 3, line 3 * | 7,8 | |
| A | DE-C- 7 358 (HARTMANN) * Page 1, lines 40-52 * | 6 | |

--- -/-

The present search report has been drawn up for all claims

| Place of search | Date of completion of the search | Examiner |
|---|---|---|
| THE HAGUE | 25-09-1986 | DE WINTER P.E.F. |

0206750

European Patent
Office

**EUROPEAN SEARCH REPORT**

Application number

EP 86 30 4683

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl.4) |
|---|---|---|---|
| A | US-A-2 144 719 (GEFFCKEN) <br> * Page 1, right-hand column, line 26 - page 2, left-hand column, line 40 * | 9 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 25-09-1986 | DE WINTER P.E.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82